# EUROPÄISCHE PATENTSCHRIFT

(11) **EP 1 030 791 B1**
(45) Veröffentlichungstag und Bekanntmachung des Hinweises auf die Patenterteilung: **01.08.2001**
(21) Anmeldenummer: 98962275.8
(22) Anmeldetag: 17.11.1998
(51) Int. Cl.: B60K 6/06

(54) **HYBRIDANTRIEB**
HYBRID DRIVE MECHANISM
DISPOSITIF D'ENTRAINEMENT HYBRIDE

(30) Priorität: 18.11.1997 DE 19751039
(43) Veröffentlichungstag der Anmeldung: 30.08.2000
(73) Patentinhaber: Thöne, Hermann, 67071 Ludwigshafen (DE)
(72) Erfinder: Thöne, Hermann, 67071 Ludwigshafen (DE)
(86) Internationale Anmeldenummer: DE9803374
(87) Internationale Veröffentlichungsnummer: WO9925579

(56) Entgegenhaltungen:
- EP-A- 0 724 978
- EP-A- 0 743 208
- DE-A- 19 618 865
- FR-A- 2 450 382

## Beschreibung

Die Erfindung betrifft einen Hybridantrieb, bestehend aus einem Elektromotor und einem Verbrennungsmotor als Antriebsmotoren, einem Schwungrad und einer stufenlos steuerbaren elektromagnetischen Kupplung.

Als Stand der Technik zählt die DE 19501574 C2 als Antriebskombination mit elektrischem Antriebsmotor, Schwungrad und stufenloser, steuerbarer Magnetkupplung.

Der Erfindung liegt die Aufgabe zugrunde, einen Hybridantrieb mit Schwungrad und stufenlos steuerbarer elektromagnetischer Kupplung zu schaffen, als optimale, platzsparende Antriebseinheit mit hohem Wirkungsgrad.

Diese Aufgabe wird durch die Merkmale des Anspruchs 1 gelöst. Die Unteransprüche enthalten Weiterbildungen und Ausgestaltungen.

Im vorerwähnten Stand der Technik der Antriebskombination ist die Anordnung eine vollkommene andere als die dieser Erfindung.

Hier hat das Schwungrad keine beweglichen Schwungmassen, sondern ist als Stahlring zu sehen, in dessen Mitte ein mit dem Stahlring fest verbundenes Aluminiumzentrum eingebettet ist und so zusammen das Schwungrad bildet.

Das Aluminiumzentrum ist ebenfalls ringförmig ausgebildet und in dessem Innern ist eine stufenlos steuerbare elektromagnetische Kupplung mit einem Freilauf integriert. Der Wirkungsgrad ist dadurch verbessert, weil sich die Magnetkupplung nicht als ein selbständiges Bauteil auf gleicher Welle neben dem Schwungrad befindet, sondern im Schwungrad integriert kein äußerer Widerstand mit drehbarem Teil in Form von Luftwirbel aufkommt. Eine weitere Wirkungsgradverbesserung tritt auf, weil sich das Schwungrad mit der Magnetkupplung auf einem Freilauf bewegt und eine Drehzahlerhöhung des Schwungrades gegenüber der Motordrehzahl Energie freistellt, die dem Antrieb zugute kommt.

Desweiteren ist als weiterer Antriebsmotor ein Verbrennungsmotor vorgesehen, damit wird die Antriebskombination zum Hybridantrieb.

Zweck des Hybridantriebes ist, Fahrzeuge damit auszurüsten und innerhalb geschlossener Ortschaften und Erholungsgebiete elektrisch zu fahren. Auf Autobahnen und abseits liegenden Fernverkehrsstraßen kann man mit Treibstoff fahren und zweckdienlich bei als Generator arbeitenden Elektromotor (1) die Batterien aufladen.

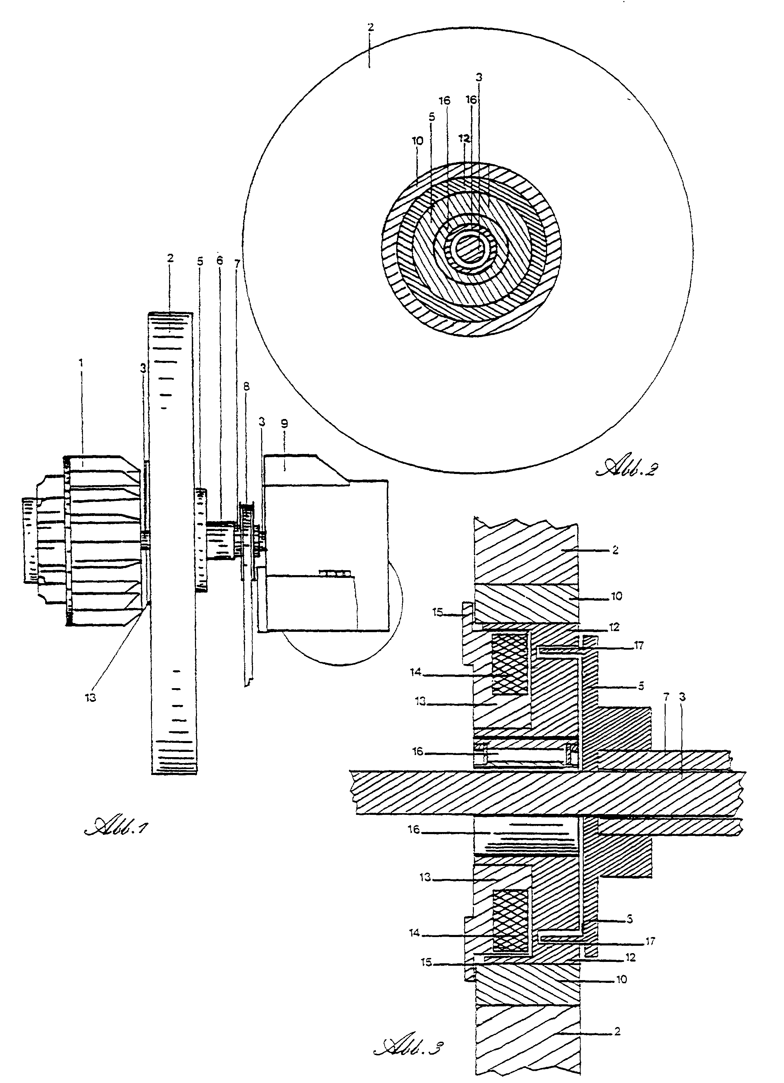

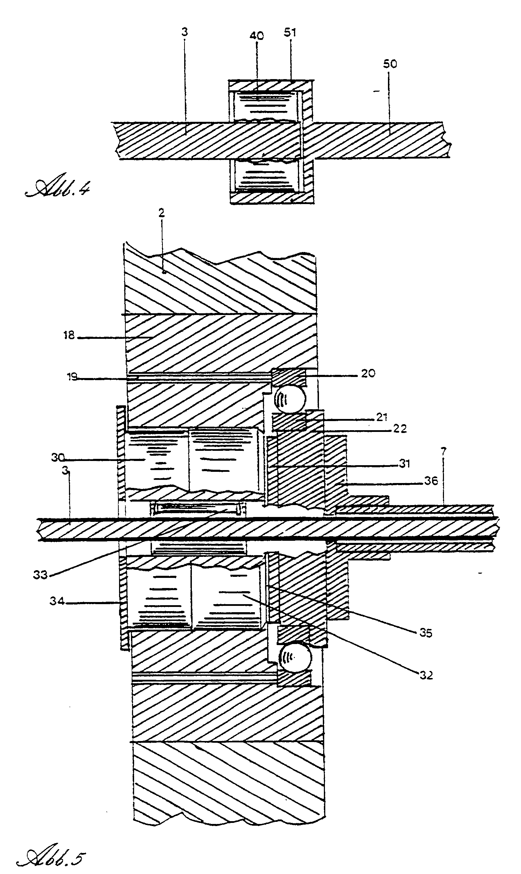

Der Hybridantrieb ist aus Abb. 1 ersichtlich. Sie zeigt den Elektromotor ( 1 ) mit dessen Antriebswelle ( 3 ) und das Schwungrad ( 2 ) mit dem Anker ( 5 ), der in dem Schwungrad eingebauten, stufenlos steuerbaren elektromagnetischen Kupplung Abb. 3 ( 5 ). Der Flansch ( 6 ) der elektromagnetischen Kupplung ist auf eine Hohlwelle ( 7 ) aufgesteckt, die als Abtriebswelle fungiert und durch die die Antriebswelle ( 3 ) läuft und den Elektromotor ( 1 ) mit dem Verbrennungsmotor ( 9 ) verbindet. Mit ( 8 ) ist ein Riemenantrieb bezeichnet. Abbildung 2 zeigt das Schwungrad ( 2 ) in der Seitenansicht. In der Mitte die Motorwelle ( 3 ) mit dem Freilauf ( 16 ), dem Anker ( 5 ), dem Rotor ( 12 ) und das Aluminium-Schwungradzentrum ( 10 ).

Eine im Schwungrad ( 2 ) eingebaute elektromagnetische Kupplung mit radialer Anziehung des Ankers ist aus Abbildung 3 ersichtlich. Sie zeigt die vom Motor durchlaufende Welle ( 3 ), die Hohlwelle als Abtriebswelle ( 7 ), der Rotor ( 12 ) mit dem Luftspalt ( 17 ), das Aluminium-Schwungradzentrum ( 2 ), den Stator ( 13 ) mit Magnetkörper ( 14 ), den Haltering ( 15 ) und den Freilauf ( 16 ).

Abbildung 4 zeigt die Verbindung der Motorwellen ( 3 u. 50 ) vom Elektromotor zum Verbrennungsmotor. An der Welle des Verbrennungsmotors befindet sich ein Verbindungs-Freilaufgehäuse ( 51 ), worin sich ein Freilauf ( 40 ) befindet.

Eine im Schwungrad eingebaute, stufenlos steuerbare elektromagnetische Kupplung mit achsialer Anziehung des Ankers mit Freilauf ist auf Abbildung 5 ersichtlich. Sie zeigt die Motorwelle ( 3 ), die Hohl- und Abtriebswelle ( 7 ), den auf der Hohlwelle sitzenden, an der Lagerhalterung ( 22 ) angebrachten Flansch ( 36 ), den Anker ( 31 ), den Rotor ( 32 ), den Stator ( 30 ), den Luftspalt ( 35 ) und die Gewinde für Schrauben zur Einjustierung des Luftspaltes ( 19 ) , den Kupplungshaltering ( 34 ) und das Aluminium-Schwungradzentrum ( 18 ) mit einem Stahlring des Schwungrades ( 2 ). Auf der Antriebswelle ( 3 ) ist ein gelagerter Freilauf ( 33 ) aufgesteckt, der im Stator ( 30 ) der Magnetkupplung eingepresst ist.

Das Aluminium-Schwungradzentrum ( 18 ) hat die Aufgabe, von der Magnetkupplung eventuell auftretende magnetische Ströme zu stoppen. Das Radiallager mit den Lagerringen ( 20 + 21 ) ist so eingebaut, daß es den Anker ( 31 ) vom Rotor ( 32 ) so weit beabstandet, daß ein für die Steuerung notwendiger Luftspalt ( 35 ) entsteht. Der Anker ( 31 ) ist an der Lagerhalterung ( 22 ) befestigt, an der ein Flansch ( 36 ) mit der Abtriebshohlwelle ( 7 ) fest verschraubt ist. In den Gewinden ( 19 ) werden Justierschrauben eingeschraubt, welche die Einstellung des Luftspaltes ( 35 ) in der Weise ermöglichen, daß diese gegen den äußeren Lagerring ( 21 ) gedreht werden. Hierdurch wird das Lager mit der Lagerhalterung ( 22 ) mit angeschraubten Anker ( 31 ) und Flansch ( 36 ) vom Rotor ( 32 ) abgedrückt, um den Luftspalt genau einstellen zu können.

Wenn der elektrische Antrieb in Funktion ist, läuft die Welle ( 3 ) vom Elektromotor ( 1 ) durch den Freilauf ( 33 ) bis zum Freilaufgehäuse ( 51 ) und endet im Freilauf (46 ). Der Freilauf ist so eingebaut, daß die Welle ( 50 ) zum Verbrennungsmotor nicht mitläuft.

Die mit dem Anker ( 31 ) über die Lagerhalterung ( 22 ) und Flansch ( 36 ) verbundene Hohlwelle ist die Abtriebswelle ( 7 ) die über die stufenlose, steuerbare elektromagnetische Kupplung und deren Luftspalt ( 35 ) über ein Potentiometer mit stufenloser Drehzahl angetrieben wird.

Der Hybridantrieb funktioniert, indem der Antriebs-Elektromotor ( 1 ) mit dem Schwungrad ( 2 ) und dem Rotor ( 5 u. 32 ) der innerhalb des Schwungrades liegenden, stufenlos steuerbaren elektromagnetischen Kupplung auf eine bestimmte Drehzahl gebracht wird. Da sich das Schwungrad ( 2 ) mit der elektromagnetischen Kupplung über den Freilauf ( 16 ) auf einer waagrechten Welle ( 3 ) dreht und die Motordrehzahl mit Erreichen der vorgegebenen Drehzahl konstant bleibt, ist eine kleine Beschleunigungsphase des Schwungrades ( 2 ) erkennbar. Durch Herunterfahren der Drehzahl des Elektromotors ( 1 ) wird im Schwungrad ( 2 ) eine kinetische Energie freigesetzt, die während der Fahrt eine Stromersparnis bringt, solange das Fahrzeug im Schwung gefahren und der Anker ( 6,31) der elektromagnetischen Kupplung angezogen bleibt. Dies geschieht durch eine elektronische Steuerung und wird mittels eines Fußpedals ausgelöst. Die kinetische Energie des Schwungrades ( 2 ) bleibt kurzzeitig je nach Beanspruchung während der Fahrt erhalten und findet ihren Nutzen im kurzzeitigem Stromabfall, bis das Schwungrad wieder motorabhängig wird.

Setzt man den Verbrennungsmotor ( 9 ) ein, wird die Welle ( 3 ) in gleicher Weise belastet wie beim Elektroantrieb. Das Schwungrad ( 2 ) wird ebenso angetrieben und die Magnetkupplung erfüllt die gleiche Aufgabe. Da die Welle ( 3 ) zum Elektromotor ( 1 ) nicht unterbrochen ist, bedingt durch den Freilauf Abb. 4 ( 40 ), läuft dieser mit und dient als Generator. Hier kann über eine Ladeelektronik die Aufladung der Batterien erfolgen.

Im Schwungrad kann sowohl eine Hysterese-Magnetkupplung gemäß Abb. 3, als auch eine Elektromagnet-Wirbelstromkupplung gemäß Abb. 5 eingesetzt werden. In der in Abb. 5 sichtbare Magnetkupplung ist als luftspaltbeabstandetes Lager ein Radialkugellager eingesetzt, da bei höheren Drehzahlen und größerem Durchmesser ein Achsialkugellager nicht brauchbar ist wegen schädlicher Auswirkung auf die Kugeln.

## Patentansprüche

1. Hybridantrieb, bestehend aus
- einem Elektromotor ( 1 )
- einer mit der Antriebswelle ( 3 ) des Elektromotors ( 1 ) über einen Freilauf ( 16 ) verbundenen, stufenlos steuerbaren, elektromagnetischen Kupplung ( 5, 12, 13, 14; 30, 31, 32 )
- einem Schwungrad ( 2 ), in welchem die elektromagnetische Kupplung ( 5,12,13,14; 30,31,32 ) fest verbunden eingebettet ist,
- einem mit der Antriebswelle ( 3 ) über ein Freilaufgehäuse ( 51 ) und Freilauf ( 40 ) verbundenen Verbrennungsmotor,
- eineram Anker ( 5, 31 ) der elektromagnetischen Kupplung ( 5,12,13,14; 30,31,32 ) zumindest mittelbar angeflanschten Hohlwelle ( 7 ) als Abtriebswelle mit Abtriebsritzel.

2. Hybridantrieb nach Anspruch 1, dadurch gekennzeichnet, daß im Schwungrad ( 2 ) zwischen der äußeren Stahlmasse und der elektromagnetischen Kupplung ( 5,12,13, 14; 30,31.32 ) ein der Stahlmasse und der elektromagnetischen Kupplung angepaßtes, kreisrundes Aluminiumzentrum ( 10,18 ) fest eingebettet ist, welches die Stahlmasse mit dem Rotor ( 12,32 ) der elektromagnetischen Kupplung verbindet.

3. Hybridantrieb nach Anspruch 1 oder 2, dadurch gekennzeichnet,
daß sowohl eine elektromagnetische Kupplung mit radialer Anziehung des Ankers ( 5 ) Abb. 3, als auch eine elektromagnetische Kupplung mit axialer Anziehung des Ankers ( 31 ) Abb. 5 Verwendung finden kann.

4. Hybridantrieb nach einem der Ansprüche 1 - 3, dadurch gekennzeichnet,
daß der Elektromotor ( 1 ) bei Betrieb des Verbrennungsmotors ( 9 ) als Generator dient zur Aufladung von Batterien.

## Claims

1. Hybrid driving device, consisting of
- electric motor (1)
- steplessly adjustable electromagnetic dutch (5,12,13,14; 30,31,32) which is with the motor shaft (3) of the electric motor (1) via a freewheel (16)
- flywheel (2) in which the electromagnetic clutch (5,12,13,14;30,31,32) is embedded via a rigid connection,
- fuel engine connected to the motor shaft (3) via a freewhell casing (51) and freewheel (40),
- hollow shaft (7) flanged to the anchor (5;31) of the electromagnetic clutch (5,12,13,14;30,31,32) as driven shaft with power take-off pinion.

2. Hybrid driving device according to claim 1, marked by the fact that in flywheel (2) a circular aluminium centre, is rigidly embedded between the outer steel mass to the rotor (12;32) of the electromagnetic clutch (12,13,14;30,31,32).

3. Hybrid driving device according to claim 1 and 2, marked by the fact that both, an electromagnetic clutch with axial attraction of the anchor (31) (Illustration 5) can be used.

4. Hybrid driving device according to claims 1 to 3, marked by the fact that the electric motor (1) is used as a generator to charge the batteries while the fuel engine (9) is in operation.

## Revendications

1. Entraînement hybride, qui est composé
- D' un électromoteur (1)
- D' un couplage électromagnétique progressif (5,12,13,14,30,31,32), raccordé à l'arbre moteur (3) de l'électromoteur (1) par une roue libre (16)
- D' un volant moteur (2) dans lequel le couplage électromagnétique (5,12,13,14,30,31,32) est encastré fixe,
- D' un moteur à combustion raccordé à l' arbre moteur (3) par carter de roue libre (51) et une roue libre (40),
- D' un arbre creux (7) au moins bridé indirectement à l' induit (5,31) du couplage électromagnétique (5,12,13,14,30,31,32) comme arbre de sortie avec pignon de sortie.

2. Entraînement hybride suivant revendication 1, marqué par le fait qu' centre d' aluminium rond (10,18) est encastré fixe dans le volant moteur (2) entre la masse d' acier extérieure et le couplage électromagnétique (5,12,13,14,30,31,32), adapté à la masse d' acier et au couplage électromagnétique (10, 18) lequel raccorde la masse d' acier avec le rotor (12,32) du couplage électromagnétique.

3. Entraînement hybride suivant revendication 1 ou 2, marqué par le fait qu' on peut utiliser un couplage électromagnétique avec attraction radiale de l'induit (5) (schéma 3) ainsi qu' un couplage électromagnétique avec attraction axiale de l' induit (31) (schéma 5).

4. Entraînement hybride suivant une des revendications 1 - 3, marqué par le fait que pendant le fonctionnement du moteur à combustion (9), le moteur électrique (1) sert de générateur pour recharger les piles.
